# EUROPÄISCHE PATENTSCHRIFT

(11) **EP 1 086 371 B1**
(45) Veröffentlichungstag und Bekanntmachung des Hinweises auf die Patenterteilung: **14.05.2003**
(21) Anmeldenummer: 99929130.5
(22) Anmeldetag: 02.06.1999
(51) Int. Cl.: G01N 27/447

(54) **VORRICHTUNG UND VERFAHREN ZUR MINIATURISIERTEN, HOCHPARALLELEN ELEKTROPHORETISCHEN TRENNUNG**
DEVICE AND METHOD FOR MINIATURIZED, HIGHLY PARALLEL ELECTROPHORETIC SEPARATION
PROCEDE ET DISPOSITIF PERMETTANT UNE SEPARATION ELECTROPHORETIQUE MINIATURISEE HAUTEMENT PARALLELE

(30) Priorität: 10.06.1998 DE 19826020
(43) Veröffentlichungstag der Anmeldung: 28.03.2001
(73) Patentinhaber: Max-Planck-Gesellschaft zur Förderung der Wissenschaften e.V., 80539 München (DE)
(72) Erfinder: HELLER, Christoph, D-14197 Berlin (DE); EICKHOFF, Holger, D-27211 Bassum (DE); BEHR, Sven, D-13591 Berlin (DE)
(74) Vertreter: Hertz, Oliver, Dr.
(86) Internationale Anmeldenummer: EP9903834
(87) Internationale Veröffentlichungsnummer: WO99064850

(56) Entgegenhaltungen:
- WO-A-97/34138
- WO-A-98/04909
- DE-A- 4 139 211
- EVANS C E: "DIRECT ON-LINE INJECTION IN CAPILLARY ELECTROPHORESIS" ANALYTICAL CHEMISTRY, Bd. 69, Nr. 15, 1. August 1997 (1997-08-01), Seiten 2952-2954, XP000699461 ISSN: 0003-2700

## Beschreibung

Die Erfindung betrifft eine Elektrophoresevorrichtung mit einer Vielzahl von separat mit Proben beschickbaren Trennkanälen, insbesondere eine Elektrophoresevorrichtung, die als Mikrosystem in Chipform hergestellt ist, und ein Elektrophoreseverfahren unter Verwendung einer derartigen Vorrichtung.

Die elektrophoretische Trennung von Substanzen und Substanzgemischen ist ein analytisches Verfahren, das insbesondere in der Biochemie und Molekularbiologie weit verbreitet ist. Die zu trennenden Substanzen werden unter Wirkung eines elektrischen Feldes in einem Trennmedium getrennt und separat detektiert. Insbesondere zur Analyse komplexer Genome und Proteome ist es erforderlich, eine sehr große Anzahl verschiedener Proben (Größenordnung rd. 10⁵ bis 10⁷) zu analysieren. Daher besteht ein Interesse an möglichst automatisch arbeitenden Analysesystemen mit hohem Probendurchsatz.

Gegenüber den herkömmlichen Elektrophoreseverfahren wurden mit der seit rd. 10 Jahren allgemein bekannten Kapillarelektrophorese die Trenngeschwindigkeit, die Empfindlichkeit und die Möglichkeit zur Automatisierung verbessert bzw. vereinfacht. Bei der Kapillarelektrophorese befindet sich das Trennmedium in einer Kapillare, die von einem Probenreservoir zu einer Auffangvorrichtung führt. Obwohl die Verwendung von Kapillaren den Vorteil einer relativ einfachen Anpassung der Kapillaranordnung in Bezug auf bestimmte Probenreservoire besitzt, führt die weitere Entwicklung unter Verwendung der Mikrosystemtechnik zu der seit rd. 5 Jahren allgemein bekannten Miniaturisierung der Kapillarelektrophorese.

Bei der miniaturisierten Kapillarelektrophorese befindet sich das Trennmedium in Mikrokanälen, die als Strukturen in Festkörper-Trägermaterialien z.B. aus Silizium oder auch aus Kunststoffen prozessiert sind. Diese Elektrophoresevorrichtungen in Chipform besitzen zwar die Vorteile einer hohen Trenngeschwindigkeit, einer zur Erzielung vergleichbarer Trennfeldstärken erforderlichen niedrigeren Spannung und einer kostengünstigen Herstellung in großer Stückzahl als Einwegprodukt, ergeben aber auch Nachteile bei der Probenbeschickung oder Probeninjektion in die Trennkanäle. So ist es erforderlich, daß die Injektion in Bezug auf den Injektionsort und das Injektionsvolumen möglichst genau und reproduzierbar erfolgt.

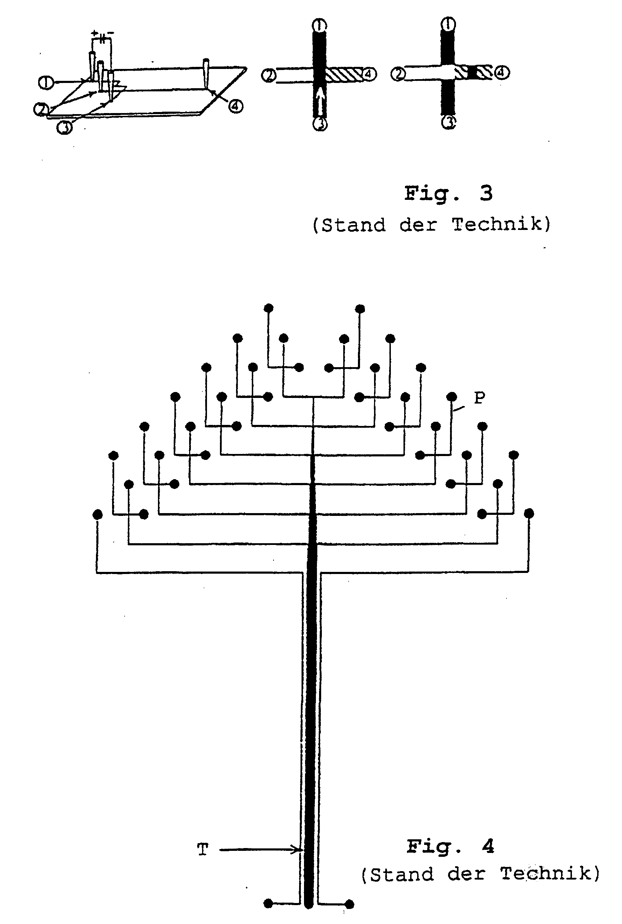

Aus den Publikationen von A.T. Woolley et al. in "Anal. Chem.", Bd. 67, 1995, S. 3676 ff., und in "Anal. Chem.", 1997, Bd. 69, S. 2181 ff., sind Elektrophoresechips mit Kanalstrukturen bekannt, die im folgenden unter Bezug auf die Figuren 3 und 4 erläutert werden. Die Grundstruktur herkömmlicher, miniaturisierter Elektrophoresevorrichtungen besteht in sich kreuzenden Kanälen zur Injektion bzw. zur Trennung. Gemäß Figur 3 ist ein Injektionskanal zwischen den Reservoiren 1 und 3 und ein Trennkanal zwischen den Reservoiren 2 und 4 vorgesehen. Während der Trennung wird zunächst der Injektionskanal mittels einer entsprechenden Elektrodeneinrichtung mit einer Spannung beaufschlagt, um die zu trennende Probe (schwarz gefüllt) in den Kreuzungsbereich zu transportieren. Anschließend erfolgt die Trennung im Trennkanal (schraffiert). Die genannte Kreuzstruktur besitzt die folgenden Nachteile.

Die Reservoirs und Elektrodeneinrichtungen nehmen viel Platz ein, wodurch die Zahl der Elektrophorese-Trennkanäle auf dem Chip beschränkt ist. Durch die ungünstige Geometrie liegen die Kanäle relativ weit voneinander entfernt, was nachteilig für die Detektion ist. Erfolgt beispielsweise eine Fluoreszenzdetektion der getrennten Substanzen, müssen ungünstige Abbildungsmaßstäbe gewählt oder von einer Scan-Einrichtung große Bereiche abgetastet werden. Dem kann zwar durch Bereitstellung gekrümmter Kanäle begegnet werden, wodurch sich jedoch weitere Nachteile bei der Herstellung und auch der Trennleistung ergeben. Der Parallelisierungsgrad (Zahl der simultan ablaufenden Trennvorgänge) ist beschränkt.

Ein weiterer Nachteil besteht in der hohen Anzahl von Reservoirs und Elektrodeneinrichtungen. Für n Kanäle werden 4n Reservoirs und Elektroden benötigt. Dies ist mit einem hohen Platzaufwand und wegen der separaten Ansteuerung auch mit einem hohen Schaltungsaufwand verbunden. Durch kombinierte Verwendung der Anoden und Kathoden einzelner Kanäle konnte bislang maximal eine Reduktion auf 2n+2 Elektroden erreicht werden.

Auch die herkömmliche Chipgestaltung gemäß Fig. 4 (A.T. Woolley et al. in "Anal. Chem." 1997, Bd. 69, S. 2181 ff., erlaubt nur eine geringfügig verbesserte Platzausnutzung. Die Trennkanäle sind aufgefächert und werden an jedem Ende von einem gesonderten Probenkanal P gekreuzt. Diese Anordnung ist auf rd. 12 Kanäle auf einem Chip der Größe 50 * 75 mm beschränkt.

Ein grundsätzlicher Nachteil herkömmlicher, miniaturisierter Elektrophoresevorrichtungen besteht darin, daß generell der Probenauftrag wegen des Fehlens einer angepaßten Schnittstelle zwischen den Mikrokanälen und der makroskopischen Welt mit einem übermäßigen Probenverbrauch verbunden ist. So müssen die Probenreservoire mit relativ großen Volumina befüllt werden, wie dies beispielsweise von S.C. Effenhauser et al. in "Elektrophoresis", 1997, Bd. 18, S. 2203 ff., beschrieben ist.

Da von den Probenreservoiren nur rd. 1% des Volumens in den jeweiligen Trennkanal injiziert wird, ergibt sich ein unakzeptabler Probenverbrauch.

Aufgrund der genannten Nachteile ist der Einsatz miniaturisierter Elektrophoresevorrichtungen bisher nur eingeschränkt möglich.

Von C. E. Evans wird in "Anal. Chem." Band 69, 1997, Seite 2952 ff. ein Kapillarelektrophoresesystem beschrieben, bei dem Proben von einer Probenkapillare unter der Wirkung eines elektrischen Feldes in eine Trennkapillare überführt werden, die die Probenkapillare kreuzt. In DE-OS 41 39 211 wird in Elektrophoresegerät mit mehreren Trennkanälen beschrieben. Die Trennkanäle werden über einzelne Kanalöffnungen beschickt. Um die Kanalöffnungen ist ein kanalförmiges Gefäß gebildet, das nach Beschickung der Kanäle mit einem Puffer gefüllt wird.

Die Aufgabe der Erfindung besteht darin, eine verbesserte Elektrophoresevorrichtung anzugeben, bei der eine vergrößerte Zahl von Trennkanälen auf einem Chip angebracht werden kann. Die verbesserte Elektrophoresevorrichtung soll insbesondere eine vereinfachte Geometrie und verbesserte Trenn- und Detektionseigenschaften besitzen. Die Aufgabe der Erfindung ist es auch, ein Verfahren zur Verwendung einer derartigen Elektrophoresevorrichtung anzugeben, mit dem insbesondere der Probenauftrag in die Elektrophoresevorrichtung vereinfacht und der Probenverbrauch verringert wird.

Diese Aufgabe wird durch eine Elektrophoresevorrichtung und ein Trennverfahren mit den Merkmalen gemäß den Patentansprüchen 1 bzw. 8 gelöst. Vorteilhafte Ausführungsformen der Erfindung ergeben sich aus den abhängigen Ansprüchen.

Die Aufgabe der Erfindung wird insbesondere durch eine neue Kanalgeometrie gelöst, bei der die von den herkömmlichen Kreuzstrukturen an sich bekannten Quer- oder Probenkanäle jedes Trennkanals zu einem gemeinsamen Injektionskanal verbunden werden, der jeden Trennkanal kreuzt. Der Injektionskanal ist mit einer Elektrodeneinrichtung versehen, die lediglich zwei Elektroden an seinen Enden aufweist. In unmittelbarer Nähe jedes Kreuzungspunktes zwischen dem Injektionskanal und den Trennkanälen besitzt der Injektionskanal jeweils einen Auftragsbereich, in dem die Probenbeschickung erfolgt. Auf der dem Auftragsbereich gegenüberliegenden Seite jedes Kreuzungspunktes, an dem der Injektions- und der Trennkanal miteinander in Verbindung stehen, besitzt der Injektionskanal gegebenenfalls eine Probenbarriere, um eine Kontamination des nächstfolgenden Auftragsbereichs des benachbarten Trennkanals zu verhindern.

Gemäß einem besonderen Aspekt der Erfindung verlaufen die Trennkanäle durchgehend von einem bis zum anderen Ende des Trägerchips. Dies ermöglicht den Einsatz des Trägerchips in eine wiederverwendbare Elektrophoresekammer mit Pufferreservoiren und einer Elektrodeneinrichtung zur Erzeugung der Trennfeldstärke. Die Trennkanäle sind an den Chipenden offen, so daß durch einfache Einbringung des Trägerchips in die Elektrophoresekammer der Kontakt mit den Pufferreservoiren hergestellt werden kann.

Ein weiterer, besonders wichtiger Aspekt der Erfindung besteht in der Kombination einer Elektrophoresevorrichtung mit einer Probenbeschickungseinrichtung in Form eines Mikrodispensers. Dieser besteht aus einem oder mehreren Elementen (Pipetten, Kapillaren, Metallstifte), die entweder aktiv oder passiv Flüssigkeiten aufnehmen und abgeben können. Mit dem Mikrodispenser können in vorbestimmter Weise kleinste Probenvolumina (z.B. 100 pl) jeweils in bestimmte Auftragsbereiche des Injektionskanals eingebracht werden. Für elektrisch geladene Moleküle (Ionen) kann der Mikrodispenser aus dünnen Stahlstiften bestehen, die elektrisch aufgeladen werden können. Durch entspechendes Anlegen und anschließendes Umpolen eines elektrischen Feldes können die Moleküle aufgenommen und wieder abgegeben werden. Bei einem erfindungsgemäßen Trennverfahren erfolgt somit die Probenbeschickung mit einem Mikrodispenser, der mindestens ein Element (Dispensierpipette, Kapillare oder Stahlstift) besitzt.

Die Moleküle (Ionen) können zusätzlich nach dem Auftragen an speziellen, elektrisch aufladbaren Zonen ("Elektroden") am Anfang des Trennkanals aufkonzentriert ("fokussiert") werden. Nach Auftragung in die Auftragszone wird an die möglichst schmalen (z.B. 50 µm) Zonen ein elektrisches Feld angelegt. Die Moleküle wandern zu diesem Bereich und werden dort festgehalten, wodurch eine Aufkonzentrierung der Probe erfolgt. Danach erfolgt die eigentliche Trennung.

Mit der Erfindung werden die folgenden Vorteile erzielt. Die neue Kanalgeometrie erlaubt eine erhöhte Anordnungsdichte der Trennkanäle. So lassen sich beispielsweise rd. 10-fach mehr Trennkanäle pro Chipfläche anordnen, als dies bei herkömmlichen Elektrophoresevorrichtungen möglich ist. Dies erhöht den Parallelisierungsgrad der Analyse erheblich. Ferner wird die Detektion erleichtert und aufgrund der geringen Dimensionen und des günstigeren Abbildungsmaßstabs verbessert. Es ist möglich, sämtliche Trennkanäle gerade auszuführen. Dies erleichtert die Herstellung der Elektrophoresevorrichtung und verbessert die Trenneigenschaften, da die Wanderungseigenschaften der Probe in geraden Kanälen besser kontrolliert werden können. Die Zahl der erforderlichen Elektroden wird auf vier Elektroden (jeweils zwei Elektroden für den Injektionskanal und die Trennkanäle) reduziert. Diese Reduktion ist unabhängig von der Zahl der Trennkanäle. Damit wird ein erheblicher Platzgewinn und eine Vereinfachung der Ansteuerschaltung erzielt.

Die Herstellung der Mikrostrukturen wird erheblich vereinfacht, da die Prozessierung separater Querkanäle unterbleiben kann. Der verbleibende Einbau von zwei Elektroden für den Injektionskanal verringert das Problem der Verbindung von metallischen Elektrodenwerkstoffen und Chip-Kunststoffen, so daß die Kosten zur Chipherstellung verringert werden.

Durch die erfindungsgemäße Probenbeschickung kann die Probenmenge reduziert werden. Bei einer erfindungsgemäßen Elektrophoresevorrichtung müssen gegenüber herkömmlichen Anordnungen lediglich 10 bis 30% des Probenvolumens injiziert werden.

Weitere Vorteile und Eigenschaften der Erfindung sind aus der folgenden Beschreibung der beigefügten Zeichnungen ersichtlich. Es zeigen:
- Fig. 1: eine schematische Draufsicht auf eine erfindungsgemäße Elektrophoresevorrichtung in einer Elektrophoresekammer,
- Fig. 2: eine vergrößerte Draufsicht auf die Kreuzung des Injektionskanals mit zwei Trennkanälen,
- Fig. 3: eine schematische Darstellung einer herkömmlichen Elektrophoresevorrichtung (Stand der Technik), und
- Fig. 4: eine weitere Darstellung einer herkömmlichen Elektro phoresevorrichtung (Stand der Technik).

Die Erfindung wird im folgenden unter Bezug auf eine bevorzugte Ausführungsform beschrieben, bei der ein Trägerchip mit der erfindungsgemäßen Kanalstruktur als separates Teil in einer Elektrophoresekammer vorgesehen ist. Die Erfindung ist jedoch auch mit einer einstückigen Gestalt implementierbar, bei der der Trägerchip fester Teil der Elektrophoresekammer ist.

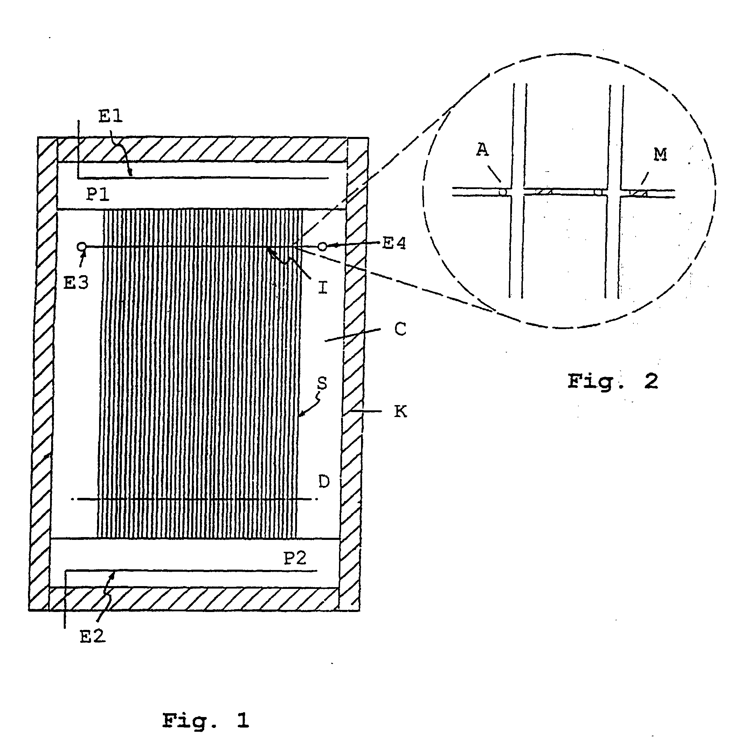

Die erfindungsgemäße Elektrophoresevorrichtung umfaßt gemäß Fig. 1 eine Vielzahl von Trennkanälen S, die sich von einem ersten Pufferreservoir P1 mit einer ersten Elektrode E1 zu einem zweiten Pufferreservoir P2 mit einer zweiten Elektroden E2 erstrecken. Die Elektroden E1, E2 werden mit einer Spannung (Trennspannung) beaufschlagt, die zur Ausbildung einer elektrischen Feldstärke in den Trennkanälen S eingerichtete ist, unter deren Wirkung die Proben mit substanzspezifischen Wanderungsgeschwindigkeiten durch die Trennkanäle wandern. Die Trennkanäle S verlaufen gerade in einem Trägerchip C zwischen den jeweils angrenzenden Pufferreservoiren P1, P2.

Nahe dem einen Ende der Trennkanäle S werden diese vom Injektionskanal I gekreuzt. Der Injektionskanal I ist ebenfalls auf der Oberfläche des Trägerchips C prozessiert, verläuft jedoch schräg oder quer zu den Trennkanälen. Zur Vereinfachung der Ansteuerung und Vereinheitlichung der Trennstrecken ist der Injektionskanal auch gerade und verläuft im wesentlichen senkrecht zur Ausrichtung der Trennkanäle. An den Enden des Injektionskanals I, d.h. beidseitig des von den Trennkanälen S durchsetzten Bereiches sind Elektroden E3, E4 vorgesehen. Die Elektroden E3, E4 werden mit einer Spannung zur Ausbildung einer Feldstärke im Injektionskanal I beaufschlagt, unter deren Wirkung die Probeninjektion jeweils von einem Auftragsbereich in einen der Trennkanäle erfolgt (Injektionsspannung). Die Injektionsspannung ist eine Gleichspannung geeignet gewählter Polarität. Zusätzlich können nach der Injektion die Moleküle an speziellen Zonen durch die Wirkung eines elektrischen Feldes aufkonzentriert werden. Am entgegengesetzten Ende der Trennkanäle S ist eine Detektionszone D vorgesehen. In der Detektionszone D werden die in den Trennkanälen aufgrund ihrer verschiedenen Wanderungsgeschwindigkeiten getrennten Substanzen detektiert. Die Detektion erfolgt in an sich bekannter Weise z.B. durch Fluoreszenz-Messungen o.ä.

Bei der dargestellten Ausführungsform sind die Trennkanäle S rd. 5 cm lang. Die Breite der Trennkanäle kann z.B. im Bereich von einigen 100 um bis rd. 20 µm liegen. Diese Größen sind jedoch je nach Anwendungsfall veränderlich. Die Trennspannung zwischen den Elektroden E1, E2 und die Injektionsspannung zwischen den Elektroden E3, E4 wird in Abhängigkeit von den gewünschen elektrischen Parametern, den Großenverhältnissen und den elektrischen Eigenschaften des Trennmediums ausgewählt, wie dies an sich von den herkömmlichen Elektrophoresevorrichtungen mit Kreuzstruktur bekannt ist. Allerdings ist die Injektionsspannung gegenüber der Injektionsspannung an einer einzelnen Kreuzstruktur gemäß Fig. 1 entsprechend der Zahl der Trennkanäle S multiplikativ erhöht, um an jeweils einem Kreuzungspunkt zwischen dem Injektionskanal I und einem Trennkanal S unter Berücksichtigung des Spannungsabfalls an den übrigen Teilen des Injektionskanals I eine genügend hohe Injektionsteilspannung auszubilden.

Der Trägerchip C besitzt eine Abdeckung (nicht dargestellt) der Trennkanäle S, die jedoch den Injektionskanal I oder die Auftragsbereiche A (s. unten) von diesem frei läßt. Die Abdekkung z.B. in Form einer Folie (oder auch einer Flüssigkeit mit geringerer Dichte) dient der Vermeidung von Verunreinigungen und der Ausbildung reproduzierbarer Eigenschaften der Trennstrecken entlang der Trennkanäle S.

Der Trägerchip C ist in die Elektrophoresekammer A zwischen den Pufferreservoiren P1, P2 einsetzbar. Zur genauen Positionierung des Trägerchips C können (nicht dargestellte) Halteeinrichtungen an der Elektrophoresekammer K vorgesehen sein.

Fig. 2 zeigt einen vergrößerten Ausschnitt der Oberfläche des Trägerchips C mit zwei Trennkanälen S und dem Injektionskanal I. Die schematische Darstellung gemäß Fig. 2 zeigt die Trennkanäle mit einer größeren Breite als den Injektionskanal. Je nach Anwendungsfall können diese Verhältnisse umgekehrt sein. Die Breite des Injektionskanals kann insbesondere anwendungsabhängig in Bezug auf eine gewünschte Auflösung der Trennung gewählt werden. Da nach der Trennung der Bereich, auf den eine aufgetrennte Substanz verteilt ist (sogenannte Bande oder Peak), nicht schmaler als der Injektionskanal werden kann, sollte bei hoch auflösenden elektrophoretischen Trennungen der Injektionskanal genügend schmal gewählt werden. In der Nähe jedes Kreuzungspunktes besitzt der Injektionskanal I jeweils einen Auftragsbereich A, der zur Probenbeschickung vorgesehen ist. Wiederum kann der Auftragsbereich A anwendungsabhängig eine gegenüber dem Injektionskanal I vergrößerte Fläche besitzen. Eine derartige Kanalerweiterung (z.B. in Trichterform) besitzt Vorteile bei der Treffsicherheit der Probenbeschickung mit einem Mikrodispenser. Die Position des Auftragsbereichs A in Bezug auf den benachbarten Trennkanal S bzw. die Polarität der an den Elektroden E3, E4 (s. Fig. 1) angelegten Injektionsspannung wird derart ausgewählt, daß unter elektrischer Feldeinwirkung eine im Auftragsbereich positionierte Probe in den benachbarten Trennkanal S wandert.

Fig. 2 zeigt auf der dem Auftragsbereich A entgegengesetzten Seite der Kreuzungspunkte jeweils eine Probenbarriere z.B. in Form einer Molekülfalle M. Die Probenbarriere kann durch eine Kanalverbreiterung, eine semipermeable Membran (z.B. Dialysemembran), die die Pufferionen durchläßt, die Probenmoleküle jedoch zurückhält, oder durch eine dreidimensionale, poröse Struktur (z.B. ein Gel) gebildet werden, das ebenfalls für die Pufferionen durchlässig, für biologische Makromoleküle hingegen undurchlässig oder behindernd ist. Im Falle der Kanalerweiterung beruht die Barrierewirkung auf der lokalen Verringerung der Dichte der elektrischen Feldlinien, wodurch in diesem Bereich Probenmoleküle eine erhebliche Verlangsamung erfahren, so daß für die Dauer der Trennzeit entlang der Trennkanäle S Probenmoleküle nicht den Auftragsbereich A des nächsten Trennkanals S erreichen können.

Die Anbringung einer Probenbarriere oder Molekülfalle M ist nicht zwingend erforderlich. Es ist alternativ möglich, die geometrischen und elektrischen Eigenschaften der Elektrophoresevorrichtung derart auszuwählen, daß die Wanderung von Proben im Injektionskanal während der Injektionsphase nicht über den jeweiligen Kreuzungsbereich hinaus erfolgt.

Die Verwendung der erfindungsgemäßen Elektrophoresevorrichtung erfolgt entsprechend den als nächstes beschriebenen Schritten.

Ein Trägerchip C wird zum Trennablauf vorbereitet, indem er mit dem Trennmedium beschickt und abgedeckt wird. Die Abdekkung kann mit einer Folie erfolgen, die den Injektionskanalbei den Auftragsbereichen A offen läßt. Der vorbereitete Trägerchip C wird in die Elektrophoresekammer A eingesetzt. Dieses Einsetzen kann automatisiert z.B. mit einer Stelleinrichtung (Roboter) erfolgen. Das Einsetzen des Trägerchips C ist vergleichbar mit dem Einsetzen eines zweidimensionalen Trenngels in eine entsprechende Elektrophoresevorrichtung bei der Gelelektrophorese. Anschließend wird die Elektrophoresekammer mit Pufferlösung befüllt. Das Befüllen erfolgt derart, daß die Pufferreservoire P1, P2 mit der Pufferlösung gefüllt sind, so daß die Enden der Trennkanäle S bedeckt sind. Somit besteht eine Verbindung zwischen der Pufferlösung in den Pufferreservoiren P1, P2 und dem Trennmedium in den Kanälen. Die Befüllung erfolgt derart, daß die Oberfläche des Trägerchips C mit der (nicht dargestellten) Abdeckfolie nicht bedeckt wird. Hierzu können gegebenenfalls an den Längsseiten des Trägerchips C hin zu den Pufferreservoiren geeignete Barrieren vorgesehen sein. Anschließend erfolgt die Beschickung der Auftragsbereiche mit einem Mikrodispenser.

Der Mikrodispenser umfaßt ein oder mehrere Elemente (Kapillaren, Metallstifte, Mikropipetten, Mikrotropfenschußeinrichtungen z.B. mit piezoelektrischer Auslösung).Vorzugsweise wird ein Mikrodispenser mit einer programmierbaren Schrittweite im µm-Bereich verwendet, um eine definierte Probenbeschickung in die Auftragsbereiche A vornehmen zu können. Die Auftragsbereiche A können simultan mit einer Reihe von Mikrodispensern (entsprechend der Anzahl der Trennkanäle S) oder seriell mit einzelnen Mikrodispensern beschickt werden.

Nach Beschickung der Auftragsbereiche mit Analyten (Probengemische) wandern diese gleichzeitig unter Wirkung des elektrischen Feldes zwischen den Elektroden E3, E4 hin zum benachbarten Trennkanal S und füllen den jeweiligen Kreuzungsbereich. Nach Beendigung dieser Injektionsphase wird das Feld zwischen den Elektroden E3, E4 abgeschaltet. Die Analyten können nun noch zusätzlich durch sich am Anfang des Trennkanals befindliche elektrische aüfladbare Zonen aufkonzentriert werden. Danach wird ein elektrisches Feld zwischen den Elektroden E1, E2 gebildet. Unter Wirkung dieses Feldes werden die Analyten in Richtung Detektionszone D transportiert und durch die Bewegung in der Trennmatrix (Gel, Polymerlösung) getrennt. In Abhängigkeit von den physikalisch-chemischen Eigenschaften der Komponenten oder Bestandteile der Probengemische erreichen diese zeitlich versetzt die Detektionszone D, wo sie einzeln identifiziert werden können. Es kann vorgesehen sein, daß während der Trennphase ein vorbestimmtes, geringes elektrisches Feld zwischen den Elektroden E3, E4 gebildet ist, um im Trennkanal S ein homogenes Feld aufrechtzuerhalten.

### Der Trennablauf kann somit drei. Phasen besitzen:

Erste Phase: Beschickung aller oder einer Vielzahl der Auftragsbereiche mit einer Mikrodispensiereinrichtung, vorzugsweise gleichzeitig oder in geringem zeitlichen Abstand,

Zweite Phase: Elektrische Injektion durch gleichzeitiges Befüllen aller Kreuzungspunkte zwischen dem Injektionskanal und den Trennkanälen unter Wirkung eines elektrischen Feldes mit anschließender eventueller Aufkonzentrierung an dafür speziell vorgesehenen Zonen, und

Dritte Phase: Parallele Trennung aller Proben in den Trennkanälen.

Nach der Detektion der Analyt-Bestandteile in der Detektionszone D (Ende der elektrophoretischen Trennung) kann der Trägerchip C der Elektrophoresekammer A entnommen und entsorgt werden. Die Elektrophoresekammer K steht für die nächste Trennung mit einem neuen Trägerchip C zur Verfügung.

Der beschriebene Ablauf ist vollständig automatisierbar. Geeignete Stelleinrichtungen setzen den Trägerchip C in die Elektrophoresekammer und positionieren den oder die Mikrodispenser an den Auftragsbereichen A. Die Stelleinrichtung kann mit einer Bildaufnahmeeinrichtung zur erleichterten Positionierung der Mikrodispenser in Bezug auf den Trägerchip C ausgestattet sein.

## Patentansprüche

1. Elektrophoresevorrichtung mit einer Vielzahl von separat mit Proben beschickbaren Trennkanälen (S), die jeweils mit einem Probenkanal verbunden sind, von dem unter elektrischer Feldwirkung Proben in den jeweiligen Trennkanal injizierbar sind,
**dadurch gekennzeichnet, dass**
die Probenkanäle miteinander verbunden sind, so dass ein gemeinsamer Injektionskanal (I) gebildet wird, der die Trennkanäle (S) an Kreuzungspunkten schneidet und an seinen Enden Elektroden (E3, E4) zur Erzeugung der elektrischen Feldwirkung aufweist, wobei der Injektionskanal (I) an jeden Trennkanal (S) angrenzend auf einer vorbestimmten Seite des jeweiligen Kreuzungspunktes einen frei liegenden Auftragsbereich (A) besitzt, der zur Probenaufnahme mit einem Mikrodispenser eingerichtet ist.

2. Elektrophoresevorrichtung gemäß Anspruch 1, bei der der Injektionskanal (I) an den Auftragsbereichen (A) jeweils Kanalerweiterungen besitzt.

3. Elektrophoresevorrichtung gemäß einem der vorhergehenden Ansprüche, bei der der Injektionskanal (I) für jeden Trennkanal auf der dem jeweiligen Auftragsbereich (A) gegenüberliegenden Seite des jeweiligen Kreuzungspunktes eine Molekülfalle (M) aufweist.

4. Elektrophoresevorrichtung gemäß Anspruch 3, bei der die Molekülfalle (M) eine Kanalerweiterung, eine semipermeable Membran oder eine dreidimensionale, poröse Struktur ist.

5. Elektrophoresevorrichtung gemäß einem der vorhergehenden Ansprüche, bei der die Trennkanäle (S) und der Injektionskanal (I) auf einem Trägerchip (C) ausgebildet sind, der Teil einer Elektrophoresekammer (K) mit Pufferreservoiren (P1, P2) jeweils mit einer Elektrode (E1 bzw. E2) ist.

6. Elektrophoresevorrichtung gemäß Anspruch 5, bei der der Trägerchip (C) zur Einwegbenutzung eingerichtet und von der Elektrophoresekammer (K) lösbar ist.

7. Elektrophoresevorrichtung gemäß einem der vorhergehenden Ansprüche, die Teil einer Analyseeinrichtung ist, die mindestens einen Mikrodispenser zur Probenzuführung in die Auftragsbereiche (A) des Injektionskanals (I) aufweist.

8. Verfahren zum Einsatz einer Elektrophoreseeinrichtung gemäß einem der vorhergehenden Ansprüche,
**dadurch gekennzeichnet, dass**
die Probenbeschickung der Probenkanäle mit einem Mikrodispenser erfolgt, wobei zur Probentrennung die Proben in den Injektionskanal (I) in der Nähe der Kreuzungspunkte zwischen dem Injektionskanal (I) und jeweils einem Trennkanal (S) eingebracht und unter Wirkung eines elektrischen Feldes im Injektionskanal in den Trennkanal überführt werden, wo die elektrophoretische Trennung erfolgt.

9. Verfahren gemäß Anspruch 8, bei dem die Proben vor der Trennung in vorbestimmten Zonen am Beginn des Trennkanals elektrisch aufkonzentriert werden.

## Claims

1. Electrophoresis device, having a multiplicity of separation channels (S) which can be fed separately with samples, said channels being connected respectively to a sample channel, from which samples can be injected into the respective separation channel under an electric field effect,
**characterised in that**
the sample channels are connected to each other so that a common injection channel (I) is formed, which cuts the separation channels (S) at intersection points and has electrodes (E3, E4) at its ends for producing the electric field effect, the injection channel (I) which abuts on each separation channel (S) having one depositing region (A), which remains open, on one predetermined side of the respective intersection point, said depositing region being equipped with a microdispenser for receiving samples.

2. Electrophoresis device according to claim 1, in which the injection channel (I) has channel widenings at the depositing regions (A) respectively.

3. Electrophoresis device according to one of the preceding claims, in which the injection channel (I) has a molecule trap (M) for each separation channel on the side of the respective intersection point which is oppositely situated to the respective depositing region (A).

4. Electrophoresis device according to claim 3, in which the molecule trap (M) is a channel widening, a semipermeable membrane or a three-dimensional, porous structure.

5. Electrophoresis device according to one of the preceding claims, in which the separation channels (S) and the injection channel (I) are configured upon a carrier chip (C) which is part of an electrophoresis chamber (K) with buffer reservoirs (P1, P2) with one electrode (E1 or E2) respectively.

6. Electrophoresis device according to claim 5, in which the carrier chip (C) is equipped for disposable use and is detachable from the electrophoresis chamber (K).

7. Electrophoresis device according to one of the preceding claims, which is part of an analysis device which has at least one microdispenser for supplying samples in the depositing regions (A) of the injection channel (I).

8. Method for using an electrophoresis device according to one of the preceding claims,
**characterised in that**
the sample feeding of the sample channels is effected with a microdispenser, the samples being introduced into the injection channel (I) in the vicinity of the intersection points between the injection channel (I) and one separation channel (S) respectively in order to separate the samples and, under the effect of an electric field in the injection channel, being transferred into the separation channel where the electrophoretic separation is effected.

9. Method according to claim 8, in which the samples are electrically concentrated before separation in predetermined zones at the beginning of the separation channel.

## Revendications

1. Dispositif d'électrophorèse avec une pluralité de canaux de séparation (S) pouvant être alimentés en échantillons séparément, qui sont respectivement reliés à un canal d'échantillon, depuis lequel des échantillons peuvent être injectés dans le canal de séparation respectif sous l'effet du champ électrique, **caractérisé en ce que** les canaux d'échantillons sont reliés les uns aux autres de façon à former un canal d'injection commun (I) qui croise les canaux de séparation (S) à des points d'intersection et présente des électrodes (E3, E4) à ses extrémités pour générer l'effet de champ électrique, le canal d'injection (I) présentant une zone d'application libre (A) adjacente à chaque canal de séparation (S) sur un côté prédéfini du point d'intersection respectif, qui est équipé d'un micro-dispenseur pour la réception des échantillons.

2. Dispositif d'électrophorèse selon la revendication 1, dans lequel le canal d'injection (I) présente des élargissements du canal au niveau de chaque zone d'application (A) .

3. Dispositif d'électrophorèse selon l'une quelconque des revendications précédentes, dans lequel le canal d'injection (I) présente une trappe pour molécules (M) pour chaque canal de séparation sur le côté de chaque point d'intersection opposé à la zone d'application respective (A).

4. Dispositif d'électrophorèse selon la revendication 3, dans lequel la trappe pour molécules (M) est un élargissement du canal, une membrane semi-perméable ou une structure poreuse tridimensionnelle.

5. Dispositif d'électrophorèse selon l'une quelconque des revendications précédentes, dans lequel les canaux de séparation (S) et le canal d'injection (I) sont réalisés sur un chip de support (C) qui fait partie d'une chambre d'électrophorèse (K) avec des réservoirs tampon (P1, P2), chacun présentant une électrode (E1 ou E2).

6. Dispositif d'électrophorèse selon la revendication 5, dans lequel le chip de support (C) est disposé pour l'utilisation unique et est détachable de la chambre d'électrophorèse (K).

7. Dispositif d'électrophorèse selon l'une quelconque des revendications précédentes, qui fait partie d'un dispositif d'analyse qui présente au moins un micro-dispenseur pour l'alimentation des échantillons dans les zones d'application (A) du canal d'injection (I).

8. Procédé pour la mise en oeuvre d'un dispositif d'électrophorèse selon l'une quelconque des revendications précédentes, **caractérisé en ce que** l'alimentation en échantillons des canaux d'échantillons s'effectue par un micro-dispenseur, les échantillons, pour la séparation des échantillons, étant introduits dans le canal d'injection (I) au voisinage des points d'intersections entre le canal d'injection (I) et respectivement un canal de séparation (S) et convoyés sous l'effet d'un champ électrique dans le canal d'injection au canal de séparation, où la séparation par électrophorèse s'effectue.

9. Procédé selon la revendication 8, dans lequel les échantillons sont électriquement concentrés avant la séparation dans des zones prédéfinies au début du canal de séparation.
